# FASCICULE DE BREVET EUROPEEN

(11) **EP 0 926 794 B1**
(45) Date de publication et mention de la délivrance du brevet: **14.06.2006**
(21) Numéro de dépôt: 98403137.7
(22) Date de dépôt: 14.12.1998
(51) Int. Cl.: H02H 6/00

(54) **Dispositif électronique de modélisation de l'état thermique d'un moteur**
Elektronische Vorrichtung zur Modellierung der Temperatur eines Motors
Electronic device for modelling the temperature of a motor

(30) Priorité: 19.12.1997 FR 9716446
(43) Date de publication de la demande: 30.06.1999
(73) Titulaire: SCHNEIDER ELECTRIC INDUSTRIES SAS, 92500 Rueil-Malmaison (FR)
(72) Inventeur: Gousset, Alain, 92000 Nanterre (FR); Guibert, Philippe, 78400 Chatou (FR)

(56) Documents cités:
- EP-A- 0 237 412
- EP-A- 0 347 703
- US-A- 3 808 503

## Description

La présente invention se rapporte à un dispositif électronique modélisant l'échauffement d'un moteur, à partir des signaux de capteurs de courant disposés sur les phases d'alimentation du moteur.

Un échauffement dangereux pour un moteur peut être provoqué par une faible surcharge prolongée, un faible déséquilibre des phases, des démarrages trop longs ou trop fréquents, le calage du moteur, des régimes intermittents. Un relais de protection électronique intervient en calculant l'échauffement du moteur, à partir des signaux fournis par des capteurs situés sur chacune des phases d'alimentation. Ce calcul est effectué en tenant compte des inerties thermiques.

Le relais électronique que décrit le brevet US 3 808 503 comporte, sur chaque phase d'alimentation du moteur, un capteur de courant envoyant un signal « image » du courant de phase à un circuit électronique de traitement qui délivre un courant proportionnel au carré du courant moteur, à un circuit de modélisation de l'échauffement du moteur constitué par un circuit R-C.

L'invention a notamment pour but d'éviter d'injecter, sur le circuit de modélisation de l'échauffement du moteur, comme dans les solutions connues, un courant proportionnel au carré du courant moteur. Cette solution procure une plage de réglage « client » plus importante que celle obtenue avec les solutions connues.

Selon l'invention, le dispositif électronique de modélisation de l'état thermique d'un moteur à partir des signaux de capteurs de courant disposés sur les phases d'alimentation du moteur comprend,
- un circuit de modélisation de type RC pouvant servir à une fonction de détection,
- des moyens d'interface recevant les signaux des capteurs de courant et délivrant une tension image du ratio du courant moteur et d'un courant de réglage et,
- des moyens de calcul fournissant, à partir de ladite tension, au circuit de modélisation, un train d'onde de courant de charge dont l'amplitude et la durée sont, l'une et l'autre, proportionnelles au ratio ci-dessus et,
se caractérisé par le fait que le courant de réglage est défini par une résistance variable.

L'invention va maintenant être décrite avec plus de détail en se référant à un mode de réalisation donné à titre d'exemple et représenté par les dessins annexés sur lesquels:
- la figure 1 est un schéma général du dispositif de modélisation selon l'invention;
- la figure 2 représente un circuit dit de normalisation faisant partie du dispositif de la figure 1;
- la figure 3 représente un circuit de sommation des courants faisant partie du dispositif de la figure 1;
- la figure 4 représente un circuit de calcul et un circuit de modélisation associé qui font partie du dispositif de la figure 1;
- la figure 5 représente des chronogrammes illustrant le fonctionnement du dispositif.

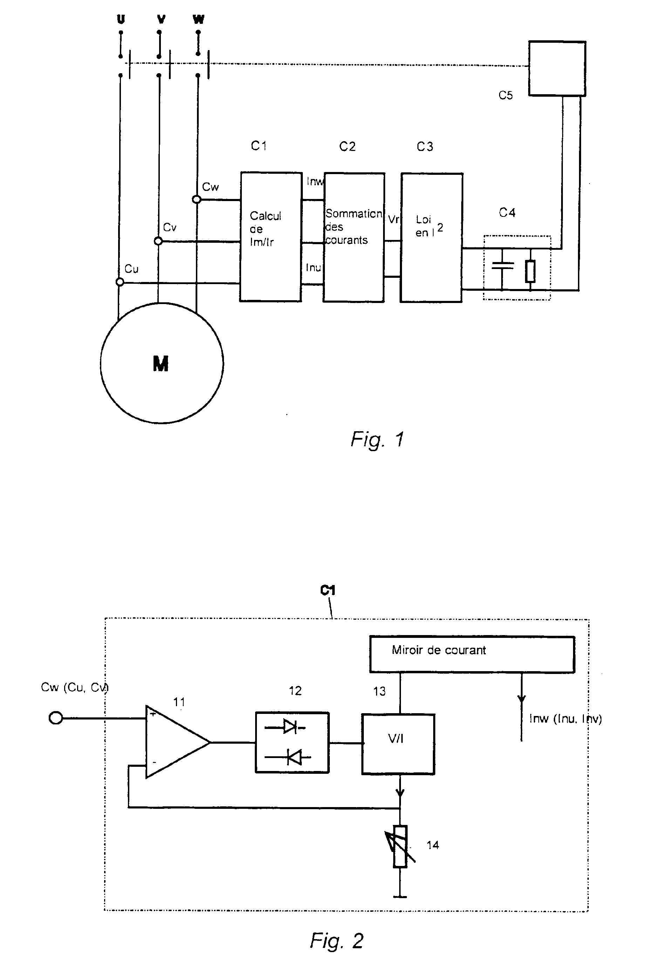

Le dispositif selon l'invention, tel qu'illustré à la figure 1, est destiné à modéliser l'échauffement d'un moteur électrique triphasé M qui est alimenté par des lignes de phase U, V.W.

Sur chaque ligne de phase U ou V ou W est disposé un capteur de courant Cu ou Cv ou Cw qui délivre, sur sa sortie, une tension image du courant moteur lm de la phase correspondante.

Chaque tension de sortie d'un capteur de courant Cu, Cv, Cw est délivrée à un circuit de normalisation C1 qui délivre, en sortie, un courant dit « normé » qui est proportionnel au ratio du courant moteur et du courant de réglage Ir, cela pour les trois phases.

Les trois courants « normés » Inu, Inv, Inw sont envoyés à un circuit de sommation C2 qui fournit, en sortie, une tension Vr proportionnelle à la somme des trois courants Inu. Inv, Inw, images des ratios Im/Ir.

La tension Vr qui est l'image du ratio lm/lr est envoyée à un circuit de calcul C3 qui délivre, en sortie, un train d'onde de courant Ig dont l'amplitude et la durée sont, l'une et l'autre, proportionnelles à ladite tension d'entrée Vr.

Le train d'onde de courant Ig est injecté à un circuit de modélisation C4 de type RC qui a pour fonction de modéliser l'échauffement du moteur.

Le circuit C1 dit de normalisation tel qu'il est illustré à la figure 2 comporte, pour chaque phase, un comparateur 11 dont une entrée reçoit le signal d'un capteur de courant (tel que Cw) qui est une tension proportionnelle au courant moteur lm dans la phase. Ce comparateur pilote, via un circuit redresseur 12, un circuit 13 associé à une résistance variable 14 définissant le courant de réglage Ir et générant un courant dit « normé » (Inw par exemple) qui est proportionnel au ratio lm/lr. Les différents courants « normés » Inu, Inv, Inw sont envoyés par un miroir de courant au circuit C2 de sommation des courants.

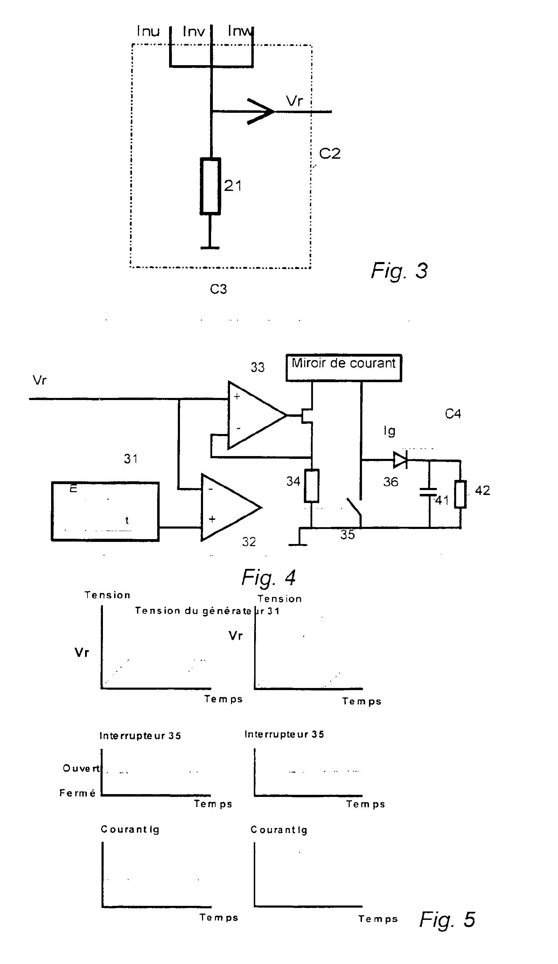

Le circuit C2 de sommation des courants « normés » tel qu'il est illustré à la figure 3 reçoit sur une résistance 21 les différents courants « normés » Inu, Inv, lnw. La tension Vr aux bornes de la résistance 21 est du type triphasée, redressée, double alternance et est proportionnelle à la somme des courants « normés » Inu. Inv, Inw.

La tension Vr, image du ratio lm/ir, est envoyée, dans le circuit de calcul C3 qui est illustré à la figure 4, à la fois sur un comparateur 33 et sur un comparateur 32. Le comparateur 33 reçoit la tension « image » Vr et contrôle le courant débité dans une résistance 34, ce courant étant proportionnel à la somme des courants « normés ». Une image de ce courant est appliquée, par l'intermédiaire d'un miroir de courant, sur un chemin de courant sur lequel est placé un interrupteur statique d'échantillonnage 35. Le comparateur 32 reçoit d'une part une tension en dents de scie triangulaires générée par un générateur de rampes 31 et d'autre part la tension « image » Vr et il pilote l'interrupteur statique d'échantillonnage 35 qui hache un courant Ig, image de la somme des courants « normés ».

Le courant haché Ig est injecté sur un circuit C4 dit de modélisation de l'échauffement moteur qui se compose d'un condensateur 41 et d'une résistance 42. Une diode 36 évite que les charges du condensateur 41 soient injectées vers le circuit C3. Ce circuit C4 permet de commander un circuit de commande C5.

Le fonctionnement du dispositif va maintenant être expliqué.

Chaque capteur de courant Cu, Cv, Cw délivre une tension alternative dont l'amplitude est proportionnelle au courant moteur lm circulant dans la phase correspondante.

Si l'on se réfère au circuit C1, la résistance 14 est proportionnelle au courant de réglage Ir et le courant redressé, à double alternance, noté Inu, Inv ou Inw, qui sort de ce circuit, est proportionnel au ratio du courant moteur et du courant de réglage. Il est dit « normé ».

Les différents courants « normés » sont additionnés dans le circuit de sommation C2 qui délivre une tension continue « image » Vr qui est proportionnelle à la somme des trois courants « normés » Inu, Inv, Inw.

La tension « image » Vr est délivrée au circuit de calcul C3 qui fournit en sortie un train d'ondes de courant dans lequel chaque onde de courant présente une amplitude proportionnelle à la tension « image » Vr et présente une durée également proportionnelle à cette tension « image » Vr.

Considérons le chronogramme de la figure 5. Le générateur de rampes 31 délivre une tension E en dents de scie dont la période constante est notée T. La durée variable pendant laquelle l'interrupteur statique d'échantillonnage 35 est ouvert est notée t. C'est pendant ce temps t que le courant de charge Ig est délivré à la sortie du circuit de calcul C3.

Le train d'ondes de courant de charge Ig présente une amplitude et une durée qui sont, l'une et l'autre, proportionnelles à la tension Vr, image du ratio lm/lr. Le temps d'ouverture de l'interrupteur 35 est lui aussi proportionnel à Vr.

En comparant la partie gauche et la partie droite de la figure 5, on voit que l'amplitude et la durée augmentent simultanément, lorsque la tension Vr augmente.

Lorsque l'interrupteur statique 35 est fermé, le courant Ig est nul et le condensateur 41 ne se charge pas. Lorsque l'interrupteur statique 35 est ouvert, le courant Ig est injecté dans le condensateur 41 qui se charge. En moyenne dans le temps, la quantité de charges envoyées au condensateur 41 est égale au produit du courant de charge Ig par le temps d'injection. Elle est donc proportionnelle au carré de la tension Vr. Grâce à la diode 36, le condensateur 41 ne se décharge pas vers l'interrupteur 35.

II est bien entendu que l'on peut sans sortir du cadre de l'invention imaginer des variantes et des perfectionnements de détail et de même envisager l'emploi de moyens équivalents.

## Revendications

1. Dispositif électronique de modélisation de l'état thermique d'un moteur (M) à partir des signaux de capteurs de courant (Cu, Cv, Cw) disposés sur les phases d'alimentation du moteur comprenant,
- un circuit de modélisation (C4) de type RC pouvant servir à une fonction de détection,
- des moyens d'interface (C1, C2) recevant les signaux des capteurs de courant et délivrant une tension (Vr) image du ratio du courant moteur (Im) et d'un courant de réglage (Ir) et,
- des moyens de calcul (C3) fournissant, à partir de ladite tension (Vr), au circuit de modélisation (C4), un train d'onde de courant de charge (Ig) dont l'amplitude et la durée sont, l'une et l'autre, proportionnelles au ratio ci-dessus,
**caractérisé par le fait que** le courant de réglage est défini par une résistance variable.

2. Dispositif selon la revendication 1, **caractérisé par le fait que** les moyens d'interface (C1, C2) se composent d'un circuit de « normalisation » (C1) fournissant des courants « normés » (Inu, Inv, Inw) proportionnels aux ratios du courant moteur (Im) et du courant de réglage (Ir) et d'un circuit de sommation (C2) fournissant, après sommation des courants « normés », une tension image (Vr) proportionnelle à la somme de ces courants « normés ».

3. Dispositif selon l'une quelconque des revendications précédentes, **caractérisé par le fait que** les moyens de calcul (C3) pilotent un interrupteur d'échantillonnage (35) qui hache un courant proportionnel à la somme des courants « normés » de manière à fournir le train d'ondes du courant de charge.

4. Dispositif selon l'une quelconque des revendications précédentes, **caractérisé par le fait que** les moyens de calcul (C3) comportent un comparateur (32) recevant, en entrées, le signal d'un générateur (31) de tension en dents de scie (31) et la tension (Vr) proportionnelle au ratio du courant moteur (Im) et du courant de réglage (Ir) et pilotant l'interrupteur d'échantillonnage (35).

## Claims

1. Electronic device for modelling the thermal state of a motor (M) making use of signals output from current sensors (Cu,Cv,Cw) placed on the motor powers supply phases comprises :
- a RC type modelling circuit (C4) capable of performing a detection function,
- interface means (C1,C2) which are input signals from the current sensors and output a voltage (Vr) which are an image of the ratio (Im) of the motor current to the adjustment current (Ir), and
- calculation means (C3) using the said voltage (Vr) as input and then output a charging current wave stream to the modelling circuit (C4), the amplitude and duration of the charging current (Lg) both being proportional to the above ratio,
**characterized by** the fact that the adjustment current is defined by a variable resistance.

2. Device according to claim 1, **characterized by** the fact that the interface means (C1, C2) each comprise a "normalization" circuit (C1) outputting "normalized" currents (Inu, Inv, Inw) proportional to the ratios of the motor currents (Im) to the adjustment currents (Ir), and a summation circuit (C2) that summates the "normalized" currents and then outputs an image voltage (Vr) proportional to the sum of these "normalized" currents.

3. Device according to anyone of the previous claims, **characterized by** the fact that the calculation means (C3) control a sampling switch (35) that chops a current proportional to the sum of the "normalized" currents, in order to supply the charging current wave stream.

4. Device according to any one of the previous claims, **characterized by** the fact that the calculation means (C3) comprise a comparator (32), into which are input the signal from a saw tooth voltage generator (31) and the voltage (Vr) proportional to the ratio of the motor current (Im) to the adjustment current (Ir), and which control the sampling switch (35).

## Patentansprüche

1. Elektronische Vorrichtung zur Bildung eines Modells des Wärmezustands eines Motors (M) ausgehend von den Signalen von auf den Versorgungsphasenleitern des Motors angeordneten Stromsensoren (Cu, Cv, Cw), die aufweist:
- eine Modellbildungsschaltung (C4) vom Typ RC, die einer Erfassungsfunktion dienen kann,
- Schnittstellenmittel (C1, C2), die die Signale der Stromsensoren empfangen und eine Spannung (Vr) liefern, die ein Bild des Verhältnisses zwischen dem Motorstrom (Im) und einem Regelstrom (Ir) darstellt, und
- Rechenmittel (C3), die ausgehend von dieser Spannung (Vr) an die Modellbildungsschaltung (C4) einen Ladestrom-Wellenzug (Ig) liefern, dessen Amplitude sowie dessen Dauer proportional zum obigen Verhältnis sind,
**dadurch gekennzeichnet, dass** der Regelstrom durch einen veränderlichen Widerstand definiert wird.

2. Vorrichtung nach Anspruch 1, **dadurch gekennzeichnet, dass** die Schnittstellenmittel (C1, C2) aus einer "Normierungs"-Schaltung (C1), die "normierte" Ströme (Inu, Inv, Inw) proportional zu den Verhältnissen des Motorstroms (Im) und des Regelstroms (Ir) liefert, und aus einer Summierschaltung (C2) bestehen, die nach der Summierung der "normierten" Ströme eine Bild-Spannung (Vr) proportional zur Summe dieser "normierten" Ströme liefert.

3. Vorrichtung nach einem der vorhergehenden Ansprüche, **dadurch gekennzeichnet, dass** die Rechenmittel (C3) einen Tastschalter (35) aufweisen, der einen Strom proportional zur Summe der "normierten" Ströme zerhackt, um den Ladestrom-Wellenzug zu liefern.

4. Vorrichtung nach einem der vorhergehenden Ansprüche, **dadurch gekennzeichnet, dass** die Rechenmittel (C3) einen Komparator (32) aufweisen, der eingangsseitig das Signal eines Sägezahnspannungsgenerators (31) sowie die Spannung (Vr) empfängt, welche proportional zum Verhältnis des Motorstroms (Im) zum Regelstrom (Ir) ist und den Testschalter (35) steuert.
